# DEMANDE DE BREVET EUROPEEN

(11) **EP 1 830 182 A1**
(43) Date de publication de la demande: **05.09.2007**
(21) Numéro de dépôt: 06110281.0
(22) Date de dépôt: 22.02.2006
(51) Int. Cl.: G01N 27/22, B60S 1/08, B32B 17/10

(54) **Vitrage feuilleté**

(71) Demandeur: GLAVERBEL, 1170 Bruxelles (BE)
(72) Inventeur: Lefevre, Hugues, 6040, Jumet (BE)
(74) Mandataire: Le Vaguerèse, Sylvain Jacques

(57) **Abrégé**

L'invention concerne un vitrage feuilleté (2), incluant au moins une paire indépendante d'électrodes (20), pour la mesure une quantité de liquide (14) ou de solide sur une surface extérieure (12) du vitrage, apte à être contrôlée indépendamment, dont les électrodes (20) sont séparées par une zone électriquement non conductrice, et sont non entrelacées.

Le vitrage (2) peut par exemple être utilisé pour constituer une vitre d'un véhicule et pour permettre d'y détecter la présence de pluie, pour commander les essuie-glaces.

L'invention concerne également une méthode de mesure d'une quantité de liquide ou d'un solide sur une surface extérieur d'un vitrage incluant une étape de mesure de la variation dans le temps de la capacité formée par au moins une paire indépendante d'électrode.

## Description

### Domaine de l'invention

L'invention se rapporte à un vitrage feuilleté adapté pour une mesure d'une quantité d'un liquide ou d'un solide sur une surface extérieure du vitrage, incluant une première feuille transparente, dite feuille extérieure, dont une des deux surfaces est destinée à constituer la surface extérieure du vitrage; une deuxième feuille transparente, dite feuille intérieure; et une feuille intermédiaire, dite feuille plastique, située entre la feuille extérieure et la feuille intérieure.

Le vitrage feuilleté peut par exemple être utilisé pour constituer une vitre d'un véhicule et pour permettre d'y détecter la présence d'un liquide, tel que la pluie, ou d'un solide, tel que la neige ou des grêlons, sur la surface extérieure de la vitre, de manière à commander l'enclenchement, la cadence ou la vitesse du ou des essuie-glaces.

L'invention se rapporte également à une méthode de mesure d'une quantité d'un liquide ou d'un solide sur une surface extérieure d'un vitrage.

### État de la technique

De tels vitrages feuilletés sont déjà connus dans l'état de la technique.

Par exemple, le brevet américain US 6,094,981 divulgue un tel vitrage feuilleté présentant un revêtement métallique dont une région est isolée et séparée du point de vue électrique du reste du revêtement pour réaliser une détection capacitive de la présence d'humidité sur la surface extérieure de la couche extérieure de la vitre.

Les vitrages feuilletés de l'état de la technique présentent néanmoins des désavantages notables. Le vitrage feuilleté divulgué dans le brevet américain US 6,094,981 par exemple est en effet insuffisamment sensible à l'apparition de liquide ou de solide sur la surface extérieure de la vitre, et, d'une façon générale, les vitrages feuilletés de l'état de la technique sont relativement fort sensibles à des éléments parasites de l'environnement tels que la température et le taux d'humidité ambiants.

### Résumé de l'invention

Un but de l'invention est de fournir un vitrage feuilleté qui résout au moins partiellement les problèmes de l'état de la technique, et en particulier un vitrage feuilleté présentant une meilleure sensibilité à l'apparition de liquide ou de solide sur la surface extérieure de la vitre, dans une certaine mesure ainsi qu'une moins grande sensibilité aux éléments parasites tel que température et taux d'humidité ambiants.

A cette fin, le vitrage feuilleté selon l'invention est caractérisé en ce que le vitrage inclut en outre, entre la feuille extérieure et la feuille intérieure et sur une surface parallèle à celles-ci, au moins une paire d'électrodes, dite paire indépendante, destinée à la mesure, apte à être contrôlée indépendamment, dont les électrodes sont séparées l'une de l'autre par une zone électriquement non conductrice, et sont non entrelacées, c'est-à-dire que chaque branche d'au moins une des électrodes n'est adjacente que d'un seul côté à une branche de l'autre électrode. En d'autres termes une paire d'électrodes est non entrelacée si au moins une des deux électrodes ne comporte qu'une seule branche.

Ainsi, le vitrage feuilleté selon l'invention présente une meilleure sensibilité à l'apparition de liquide ou de solide sur la surface extérieure de la vitre. En effet, le fait que le vitrage inclut au moins une paire d'électrodes, dite paire indépendante, définie en ce que la paire d'électrodes est destinée à la mesure, qu'elle est apte à être contrôlée indépendamment, et que ses électrodes présentent une disposition relative sans entrelacement permet d'éliminer un certain nombre de capacités parasites inhérentes à la forme des électrodes intégrées dans les vitrages feuilletés tels que divulgués dans l'état de la technique.

Afin de bien comprendre la solution proposée par le vitrage feuilleté selon l'invention, il convient de saisir la particularité des vitrages présentant des électrodes formées à l'intérieur même de ceux-ci par rapport aux vitrages comprenant des électrodes présentes sur une des deux surfaces externes de la vitre d'un véhicule. Les deux types de vitrage ont le même but, permettre, moyennant un circuit électronique de mesure adapté, de détecter la présence de liquide ou de solide sur la surface extérieure de la vitre du véhicule par le biais d'une mesure capacitive. Le principe physique de fonctionnement est similaire, mais les modalités de mise en oeuvre diffèrent.

L'apparition d'un liquide ou d'un solide dans l'environnement des électrodes, et particulièrement sur la surface extérieure de la vitre, modifie la valeur de la capacité formée par deux électrodes données, et cette modification peut être détectée pour en déduire la présence dudit liquide ou dudit solide sur la surface extérieure. La constante diélectrique εᵣ ou permittivité relative de l'air étant approximativement égale à 1, celle du verre approximativement égale à 2 et celle de l'eau approximativement égale à 80, il est aisé de comprendre que la valeur de la capacité formée par deux électrodes données est très sensible en particulier à la présence d'eau sur la surface extérieure de la vitre.

Les électrodes disposées sur une des deux surfaces externes de la vitre d'un véhicule fonctionnent ainsi selon un principe physique similaire à celui selon lequel fonctionnent les électrodes disposées à l'intérieur même du vitrage feuilleté, mais les premières présentent de nombreux désavantages. Quand elles sont disposées sur la surface externe extérieure de la vitre, elles sont en effet sujettes à une abrasion importante, par exemple à cause du balayage du ou des essuie-glaces, du nettoyage de la vitre ou des intempéries, ce qui rend ce type de disposition inapproprié sur le long terme pour l'utilisation dans des véhicules de série notamment. De la même manière, quand elles sont disposées sur la surface externe intérieure, elles peuvent subir une abrasion suite au nettoyage de la vitre et sont surtout fort sensibles à l'apparition de buée sur la surface intérieure de la vitre du véhicule, ce qui les rend également peu appropriées pour l'utilisation dans des véhicules de série.

La disposition des électrodes à l'intérieur même du vitrage se présente donc comme une solution avantageuse pour remédier aux problèmes mentionnés ci-dessus.

Néanmoins, les vitrages de l'état de la technique, tel que celui divulgué dans le brevet américain US 6,094,981, et le fait même qu'ils présentent des électrodes entrelacées dégrade fortement la précision de la mesure, contrairement à ce que l'homme du métier pourrait être amené à penser. Par électrodes entrelacées, il faut comprendre que chacune des deux électrodes d'une paire comprend au moins une branche comprise entre deux branches de l'autre électrode, formant au minimum une succession « + - + - » ou « - + - + » d'électrodes où « + » représente l'électrode dite « positive » et « - » représente l'électrode dite « négative ». Dans le cas d'électrodes entrelacées, la sensibilité à la présence de liquide est moins bonne, due à la présence de capacités parasites. Ceci peut s'expliquer par l'existence de capacités non négligeables entre branches éloignées des électrodes, rendant les mesures moins linéaires et moins stables. Ceci apparaîtra plus clairement au vu des dessins, expliqués plus loin.

En proposant une solution allant à contre-courant des vitrages feuilletés de l'état de la technique et de la pratique courante dans le domaine des capteurs capacitifs, le vitrage feuilleté selon l'invention permet d'obtenir une meilleure sensibilité, aussi surprenant que cela puisse paraître à première vue.

Dans le contexte de l'invention, le terme « branche » ne doit pas être compris de manière restrictive. Il doit être compris comme pouvant englober toute partie d'électrode 20, menant à une disposition d'électrodes ne formant pas un entrelacement, de manière à ne présenter que peu ou pas de capacités parasites indésirables entre branches « éloignées ».

Un autre objet de l'invention est de fournir un système et une méthode de mesure d'une quantité d'un liquide ou d'un solide sur une surface extérieure d'une vitre, en particulier le pare-brise ou la lunette arrière d'un véhicule, permettant l'obtention d'une sensibilité suffisante à l'apparition de liquide ou de solide sur la surface, par exemple pour activer correctement le ou les essuie-glaces du véhicule, en cas de nécessité, tout en présentant un coût raisonnable.

A cette fin, d'une part, le système selon l'invention inclut un vitrage comme décrit précédemment, formant au moins partiellement la vitre; et des moyens de mesure de variation de la capacité formée par au moins une paire indépendante du vitrage, dite capacité de mesure.

A cette fin, d'autre part, la méthode de mesure selon l'invention inclut une étape de mesure de variation dans le temps de la capacité, dite de mesure, formée par au moins une paire indépendante d'un vitrage feuilleté tel que décrit ci-dessus.

Plus particulièrement, selon un mode de réalisation particulière de la méthode de mesure selon l'invention, l'étape de mesure de variation dans le temps de la capacité de mesure inclut une étape de chargement d'une capacité de référence par transfert de charge, et de comptage du nombre de transferts d'une quantité déterminée de charge nécessaires pour charger la capacité de référence; au moins une étape de chargement simultané de la capacité de référence et de la capacité de mesure par transfert de charge, et de comptage du nombre de transferts d'une quantité déterminée de charge nécessaires pour charger lesdites capacités de référence et de mesure; et une étape de calcul de la mesure de la quantité du liquide ou du solide en fonction des nombres obtenus.

Selon ce mode de réalisation particulier de la méthode de mesure selon l'invention, la sensibilité est en général meilleure que les sensibilités obtenues avec les méthodes de mesure de l'état de la technique, souvent par pont ou variation de fréquence, car la méthode selon l'invention prend automatiquement en compte les variations des propriétés de l'environnement, telles que la température et le taux d'humidité ambiants. En effet, la présence d'une capacité de référence, de préférence beaucoup plus grande que la capacité de mesure et relativement beaucoup plus stable, et la présence des différentes étapes de la méthode permettent de réinitialiser à intervalles réguliers une grandeur de référence. Ainsi, il y a compensation des variations dans le temps des propriétés de l'environnement. Enfin, la détection de variation de capacité (et plus précisément du diélectrique du condensateur formé par les électrodes d'une paire indépendante), et l'enclenchement du ou des essuie-glaces, par exemple, se basent sur la comparaison entre la grandeur de référence et une moyenne de mesures subséquentes.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig.1: montre une vue schématique en coupe d'un vitrage feuilleté comprenant des électrodes entrelacées selon l'état de la technique;
- Fig.2: montre une vue schématique en coupe d'une réalisation particulière d'un vitrage feuilleté selon l'invention, incluant une paire d'électrodes non entrelacées;
- Fig.3: montre une vue schématique en coupe d'une autre réalisation particulière d'un vitrage feuilleté selon l'invention, incluant une paire d'électrodes non entrelacées;
- Fig.4 à 8: montrent des vues schématiques de face de cinq réalisations particulières différentes des paires d'électrodes du vitrage feuilleté selon l'invention;
- Fig. 9: montre un schéma de principe d'une réalisation particulière d'une méthode de mesure selon l'invention; et
- Fig. 10 et 11: montrent des représentations de face de réalisations particulières d'une paire d'électrodes du vitrage feuilleté selon l'invention, où les dimensions relatives des éléments sont respectées.

Généralement, des éléments semblables sont dénotés par des références semblables dans les figures.

### Description détaillée de modes de réalisation particuliers

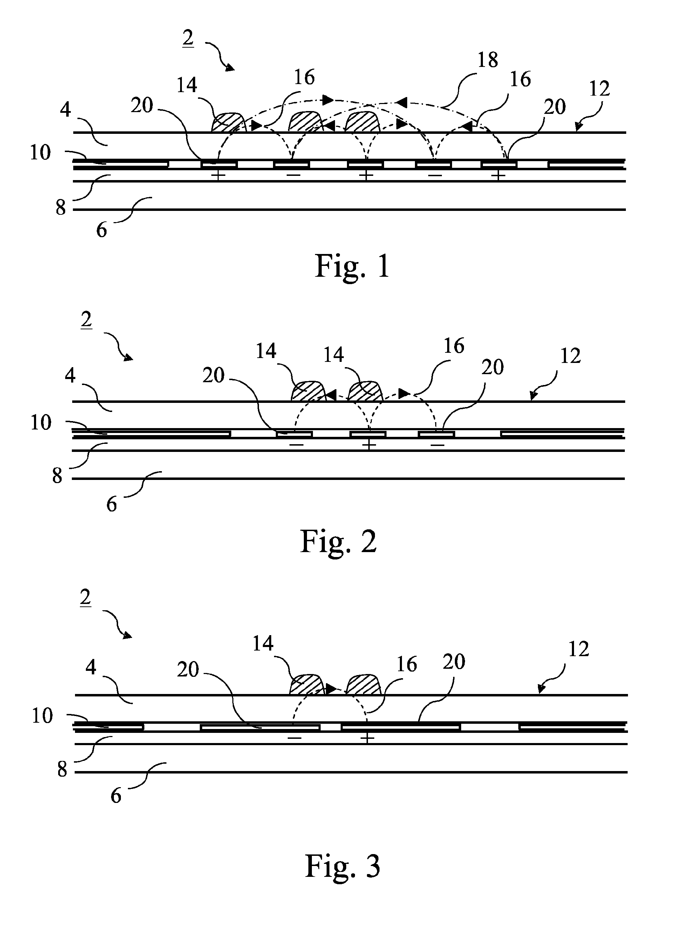

La Fig. 1 montre une vue schématique en coupe d'un vitrage feuilleté 2 comprenant des électrodes 20 entrelacées selon l'état de la technique, en vue d'expliquer pourquoi les électrodes 20 entrelacées constituent une disposition désavantageuse par rapport aux électrodes non entrelacées comme illustrées aux Fig. 2 et 3, représentant quant à elles des réalisations particulières du vitrage feuilleté 2 selon l'invention.

La Fig. 1 montre en particulier un vitrage feuilleté comprenant quatre couches principales: une feuille extérieure 4 et une feuille intérieure 6 toutes deux en verre, une couche de matière plastique 8 disposée entre les feuilles extérieure 4 et intérieure 6, et une couche électriquement conductrice 10, par exemple métallique, disposée entre la feuille extérieure 4 et la couche de matière plastique 8. La couche conductrice 10 est incomplète de manière à former une paire d'électrodes 20 entrelacées. Aux différentes parties ou branches en coupe de la première électrode 20 sont adjoints des signes « + », et aux différentes parties ou branches en coupe de la seconde électrode 20 sont adjoints des signes « - ». Des gouttes de liquide, par exemple des gouttes de pluie 14, sont posées sur la surface extérieure 12 de la feuille extérieure 4.

Enfin, les lignes pointillées régulières représentent des lignes possibles de champ électrique, en ce sens qu'elles peuvent apparaître ou non en fonction des charges présentes sur les conducteurs (ce sont en d'autres termes des lignes d'influence dépendant d'un stade donné du chargement ou de déchargement). En particulier, on distingue des lignes « courtes » 16 de champ électrique, définies comme étant celles reliant les branches d'électrodes 20 « + » et « - » voisines, et les lignes pointillées alternées représentent des lignes « longues » 18 de champ électrique, définies comme étant celles reliant les branches d'électrodes 20 « + » et « - » éloignées.

Les électrodes 20 des Fig. 2 et 3, qui représentent des vues schématiques en coupe de réalisations particulières de vitrage feuilleté 2 selon l'invention, ne présentent pas de lignes de champ électrique « longues » 18, contrairement aux électrodes 20 entrelacées de la Fig. 1. Ces lignes de champ électrique « longues » 18, qui n'apparaissent bien entendu pas simultanément, mais qui peuvent apparaître à des moments différents, influencent directement la valeur de la capacité entre la paire indépendante d'électrodes 20 et perturbent la sensibilité de la mesure, en ce sens qu'elles constituent des capacités parasites (ou plus généralement des impédances parasites).

Ce fait est particulier aux électrodes 20 intégrés dans le vitrage. En effet, les vitrages feuilletés présentant des électrodes sur la surface extérieure, fonctionnent relativement différemment puisque l'apparition de gouttes d'eau sur la surface extérieure engendre une augmentation nettement plus importante de l'intensité du champ électrique entre branches voisines, rendant négligeables les variations de champ électrique entre électrodes éloignées 20.

Grâce à l'absence de capacités parasites entre les branches d'électrodes 20 éloignées, la sensibilité obtenue avec un vitrage feuilleté 2 à électrodes intégrées 20 non entrelacées est donc meilleure que celle obtenue avec des électrodes entrelacées ou en peignes imbriqués.

Les Fig. 1 à 3 ne sont que des schémas de principe et les proportions représentées ne correspondent pas à la réalité. Les dimensions relatives des couches et des électrodes 20 ne sont pas nécessairement respectées, afin de faciliter la compréhension. En outre, entre les coupes des branches des électrodes 20 voisines, des espaces « vides » apparaissent sur les schémas. Dans la réalité, comme l'homme du métier le reconnaîtra, il n'y a bien entendu pas de tels espaces « vides » (ou éventuellement de très petits espaces non remplis de solide, par exemple sous la forme de bulles indésirables). Le film plastique 8 flue généralement dans les interstices entre électrodes 20.

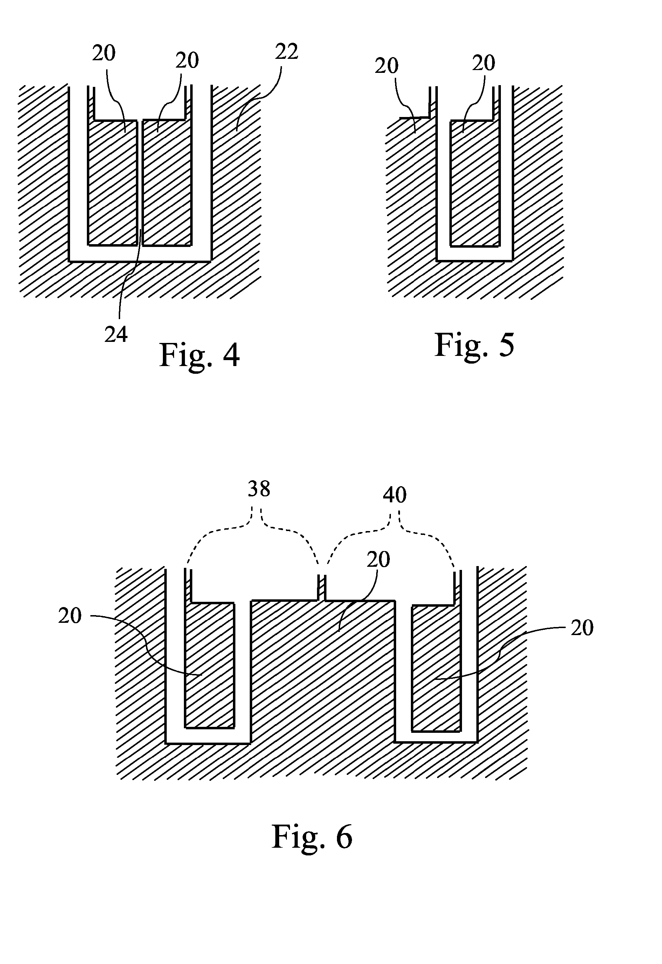

Les Fig. 4 à 8 montrent cinq réalisations particulières de paires indépendantes d'électrodes 20 de vitrages feuilletés 2 selon l'invention.

En particulier, la Fig. 4 montre une paire indépendante d'électrodes 20 constituée de deux plaques coplanaires juxtaposées et séparées par une zone électriquement non conductrice formant une bande 24 de largeur substantiellement constante. Une partie conductrice résiduelle 22 non destinée à la mesure est en outre formée dans la couche conductrice 10 (cette partie résiduelle 22 n'étant pas indispensable pour la détection de pluie, mais pouvant être indispensable à d'autres fins). Ce type de capteur sur vitrage feuilleté 2 est particulièrement sensible à l'apparition d'eau 14 sur la surface extérieure 12, comme confirmé expérimentalement, par rapport aux dispositions en entrelacement ou peignes ou celles basées sur des formes concentriques complexes.

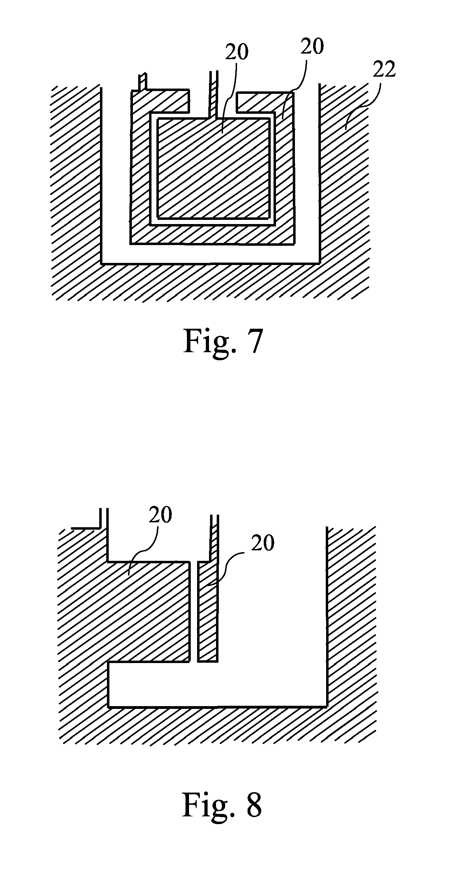

La Fig. 5 montre dans la couche conductrice 10 une seule paire indépendante. La première électrode 20 de la paire indépendante est une plaque rectangulaire (sans prendre en compte la piste de connexion) et la seconde électrode 20 est constituée par le reste de la couche conductrice 10. Ce mode de réalisation, dont une autre variante est montrée à la Fig. 8, est particulièrement intéressant car il permet de limiter les parasites et les capacités de fuite à la masse via la carrosserie du véhicule par exemple. La seconde électrode 20 constituée par le reste de la couche conductrice 10 peut par exemple être connectée à la borne « 0 volt » de la batterie du véhicule.

Selon un mode de réalisation particulier du vitrage 2 selon l'invention, plusieurs paires indépendantes d'électrodes 20, constituant chacune un détecteur de pluie, peuvent être réalisées dans la couche conductrice 10. Cela étant dit, une seule paire est en réalité suffisante pour la mesure par le fait même que les paires peuvent être contrôlées indépendamment.

La Fig. 6 illustre à titre d'exemple ce type de réalisation particulière avec deux paires indépendantes 38, 40 d'électrodes 20 formées dans la couche conductrice 10, les deux paires 38, 40 ayant une électrode 20 en commun, l'électrode 20 centrale, le tout formant ainsi trois électrodes 20 mais deux paires indépendantes. La première paire indépendante 38 et la seconde paire indépendante 40 sont aptes à être contrôlées indépendamment. L'électrode 20 située au centre peut être reliée à la masse et peut constituer le reste de la couche conductrice 10.

Selon un mode de réalisation particulier du système ou de la méthode selon l'invention, le contrôle des deux paires indépendantes 38, 40, comme représenté à la Fig. 6, est réalisé de telle manière que deux paires 38, 40 ne sont pas chargées en même temps. Ceci peut être réalisé par déphasage ou décalage temporel des chargements et présente l'avantage de diminuer les capacités parasites et d'augmenter la stabilité du système ou de la méthode.

Contrairement à ce que produirait la présence de plusieurs détecteurs optiques de pluie (comme existant dans l'état de la technique) sur un pare-brise par exemple, la présence de plusieurs paires indépendantes d'électrodes 20 dans la couche conductrice 10 (comme selon un mode de réalisation particulier du vitrage 2 selon l'invention) gêne peu la visibilité, les motifs dans la couche conductrice 10 étant en effet peu visibles et donc peu gênants. L'intérêt d'une disposition à plusieurs paires indépendantes d'électrodes 20 réside dans l'augmentation de la fiabilité de détection et celle de la surface de détection. Ainsi, le ou les essuie-glaces par exemple peuvent être contrôlés pour répondre plus rapidement dès l'apparition de pluie 14 ou dès que son intensité change.

La Fig. 7 montre une quatrième réalisation particulière du détecteur intégré au vitrage feuilleté 2 selon l'invention, incluant une disposition concentrique simple.

Selon un mode de réalisation particulier du vitrage feuilleté 2 selon l'invention, la résistivité de surface de la couche conductrice 10 est inférieure à 10 ohms par carré. Cette réalisation particulière est avantageuse en ce sens qu'une faible résistivité de surface permet d'obtenir des valeurs de capacité de mesure à sec plus faibles associées aux paires indépendantes d'électrodes 20, et, plus la capacité à sec d'une paire indépendante est faible, moins celle-ci masque les variations de valeur de capacité dues aux gouttes 14 de pluie, et plus sensible est la détection.

Selon un mode de réalisation particulier du vitrage 2 selon l'invention, la résistivité de surface de la couche conductrice 10 est inférieure à 10 ohms par carré. Selon un mode de réalisation plus particulière encore, la résistivité de surface de la couche conductrice 10 est inférieure à 3.99 ohms par carré, en particulier inférieur à 3.5 ohms par carré.

Selon un mode de réalisation particulier du vitrage feuilleté 2 selon l'invention, la valeur de la capacité à sec d'au moins une paire indépendante d'électrodes 20 est inférieure à 80 picofarads. Cette faible valeur peut être notamment obtenue grâce à une faible résistivité de surface de la couche conductrice 10, ou grâce à la forme des électrodes 20 et permet d'obtenir une très bonne sensibilité de détection pour les raisons mentionnées ci-dessus. Selon d'autres réalisations particulières, ladite valeur de la capacité à sec est inférieure à 50 pF, inférieure à 25 pF ou inférieure à 12 pF.

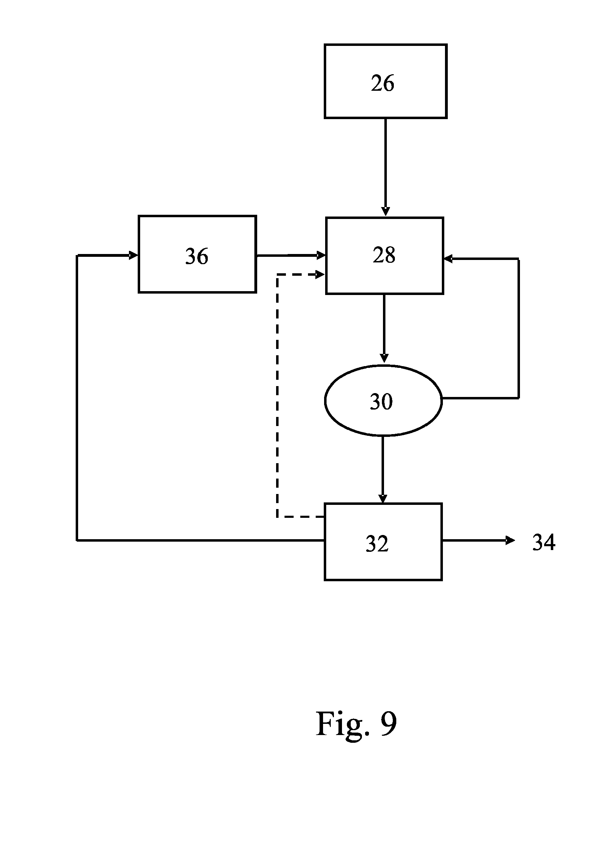

Par exemple, associées à la réalisation particulier de la méthode de mesure selon l'invention telle qu'illustrée à la Fig. 9 et telle qu'expliquée plus loin, une capacité de référence de l'ordre de 0.47 µF, une résistivité de surface de la couche conductrice 10 de 2.7 ohms par carré et une capacité de mesure (liée à la paire indépendantes d'électrodes 20) à sec de l'ordre de 10 picofarads permettent la détection de variations de capacité de mesure de l'ordre de 0.04 pF, alors que les meilleurs ensembles « électrodes et circuit de mesure » de l'état de la technique permettent l'obtention de sensibilités de l'ordre de 1 pF au minimum. La sensibilité obtenue correspond à la détection à la surface d'un verre de 2 x 2 mm d'épaisseur de 1 microlitre, soit des gouttes de l'ordre de 1 mm de diamètre.

Selon un mode de réalisation particulier du vitrage 2 selon l'invention, celui-ci inclut en outre des moyens de connexion souples situés au moins en partie au sein du vitrage 2, et électriquement connectés aux paires indépendantes. Ce mode de réalisation présente l'avantage de réduire les capacités parasites liées à la ou aux connections entre les électrodes 20 et les moyens de mesure (par exemple le circuit électronique de mesure ou détection). Les moyens de connexion souples peuvent par exemple se présenter sous la forme d'un circuit électronique souple et transparent constitué d'une feuille de polyester de 50 µm d'épaisseur revêtu de pistes conductrices cuivrées de 35 µm d'épaisseur, et inséré au sein du vitrage feuilleté 2.

Selon ce mode de réalisation particulier, le circuit permet par exemple de réaliser les contacts ou connexions électriques entre les électrodes 20 et le câblage électrique extérieur au pare-brise menant au circuit de détection lui-même. Ce circuit peut être situé au bord du vitrage 2.

Les électrodes peuvent également se trouver sur le circuit souple, qui n'est alors plus seulement un circuit souple de connexion, mais un circuit souple comprenant connexion et électrodes (constituées dans ce cas par exemple de cuivre ou de tout autre conducteur adapté). Ce mode de réalisation particulier présente l'avantage de permettre une réalisation relativement simple et dans une certaine mesure indépendante de la fabrication du vitrage 2 lui-même, le dessin sur le circuit souple pouvant être fabriqué hors de la ligne de production (« off-line ») du vitrage 2, pour être ensuite inséré au moment du feuilletage.

Selon un mode de réalisation particulier du vitrage 2 selon l'invention, les moyens de mesure sont situés au moins partiellement au sein du vitrage 2, et électriquement connectés aux paires indépendantes. Le circuit de traitement des signaux peut par exemple être entièrement inséré dans le vitrage feuilleté 2. Ce mode de réalisation particulier présente l'avantage de diminuer sensiblement les problèmes de capacités parasites liées au dispositif de connexion entre les électrodes 20 et le circuit de traitement. Ceci est possible en choisissant des circuits intégrés suffisamment minces pour pouvoir être intercalés au niveau de la couche conductrice 10. Des circuits extra-plats du type QT 100 ou QT 300 de la société Quantum Research Group existent sous format SMD et peuvent être utilisés à cette fin. Dans ce cas, en plus des électrodes 20, les pistes reliant le ou les circuits de détections et les alimentations électriques peuvent aussi être gravés dans la couche conductrice 10 incluse dans le vitrage 2, ou déposée sur le vitrage 2 si celui-ci ne contient pas de couche conductrice 10.

Une variante pour permettre l'insertion du circuit de traitement de signaux au sein du vitrage sans devoir utiliser des circuits extra plats est d'augmenter l'épaisseur de la couche de plastique 8, dans la mesure où l'augmentation de coût est raisonnable.

Selon un mode de réalisation particulière, le circuit de traitement des signaux est réalisé à la surface du circuit souple tel que décrit plus haut.

La Fig. 9 montre un schéma de principe d'une réalisation particulière d'une méthode de mesure selon l'invention.

La première étape, dite étape initiale de chargement 26, consiste à charger la capacité de référence par transfert de charge. En particulier, un train d'impulsions est utilisé pour charger la capacité de référence et le nombre d'impulsions nécessaires pour charger la capacité déterminée est compté. Ce nombre pourrait par exemple être 15000 impulsions, et est pris comme référence pour la première série de mesure.

Par l'expression « charger la capacité », il faut comprendre aux fins de la description de l'invention que le chargement se fait jusqu'à un stade donné, permettant de détecter la variation du diélectrique environnant. Par exemple, il peut s'agir d'un chargement de la capacité jusqu'à une valeur de potentiel déterminé, dans un mode de réalisation particulière de la méthode selon l'invention.

La deuxième étape, dite étape intermédiaire de chargement 28, consiste à charger à la fois et simultanément la capacité de référence et la capacité de mesure (c'est-à-dire celle formée par les électrodes dans la couche conductrice 10) par transfert de charge. Les capacités de référence et de mesure sont en parallèle lors de cette étape. Un train d'impulsions est également utilisé pour charger les capacités de référence et de mesure et le nombre d'impulsions nécessaire pour charger la capacité est compté.

Ensuite, un test 30 est réalisé pour déterminer si le nombre de fois que l'étape intermédiaire de chargement 28 a été mise en oeuvre depuis l'étape initiale de chargement 26 a atteint un nombre *n* donné. Si ce n'est pas le cas, la série de mesure est poursuivie et une étape intermédiaire de chargement 28 supplémentaire est mise en oeuvre. Si c'est le cas en revanche, une étape de calcul 32 est mise en oeuvre. Cette étape 32 consiste en la réalisation d'une moyenne des nombres d'impulsions obtenus lors des n étapes intermédiaires 28 et d'une comparaison de cette moyenne avec le nombre obtenu lors de l'étape initiale 26. Un signal de sortie 34, fonction du résultat de la comparaison, est alors issu pour la commande du ou des essuie-glaces par exemple.

Une fois cette étape de calcul 32 réalisée ou simultanément à la mise en oeuvre de celle-ci, une étape dite « de référence » de chargement 36 est mise en oeuvre. Cette étape de référence de chargement 36 consiste à charger à la fois et simultanément la capacité de référence et la capacité de mesure par transfert de charge, et plus particulièrement par l'utilisation d'un train d'impulsion. Le nombre d'impulsions nécessaire pour charger la capacité est compté.

Ensuite, une série de mesures est entreprise, c'est-à-dire une succession d'étapes intermédiaires 28 jusqu'à atteindre un nombre d'étapes intermédiaires déterminé *n*, et la moyenne des nombres obtenus est comparée au nombre obtenu lors de l'étape de référence de chargement 36 lors de l'étape de calcul 32, afin de fournir un signal de sortie 34 en fonction du résultat de la comparaison.

Le processus est ensuite réitéré indéfiniment, jusqu'à la coupure du moteur du véhicule par exemple.

Le nombre n peut par exemple être égal à 5 et les valeurs de nombre d'impulsions obtenues pourraient par exemple être 15000 (étape initiale 26), 15025, 15019, 15020, 15015, 15021 (étapes intermédiaires 28), 15018 (étape de référence), 15252, 15340, 15420, 15522, 15760 (étapes intermédiaires 28), et ainsi de suite. Dans cet exemple, la deuxième étape de calcul 32 pourrait mettre en évidence l'apparition de pluie 14, ce qui pourrait avantageusement mettre en route la commande du ou des essuie-glaces.

La réalisation particulière de la méthode de mesure selon l'invention, telle que décrite ci-dessus, est fondamentalement discrète ou, en d'autres termes, digitale. Elle fonctionne sur un principe d'échantillonnage temporel. Le principe de transfert de charge est décrit par exemple dans le document *Charge transfer sensing, Spread Spectrum Sensor Technology Blazes New Applications, 1997*, *Hal Philipp,* disponible à l'adresse web *http:*//*www.qprox.com*/*downloads*/*misc*/*white_paper.pdf.*

Un avantage notable de l'utilisation d'un tel principe pour la mesure de variation de liquide 14 ou de solide réside dans le fait que des puces ou circuits intégrés basés sur ce principe sont déjà disponibles en grandes quantités et à bas prix sur le marché pour d'autres applications, par exemple la détection d'une pression tactile sur un écran. Du point de vue économique, il est ainsi très avantageux d'utiliser de tels composants.

Un autre mode de réalisation particulier de la méthode de mesure selon l'invention peut être expliquée en se référant à la Fig. 9, et en particulier à la ligne en pointillée allant de l'étape 32 à l'étape 28, qui exprime la possibilité de réutiliser le même nombre d'impulsions (obtenu lors de l'étape de référence de chargement 36) de référence pour plusieurs séries (ou cycles) de comptage.

La réalisation particulière de la méthode de mesure selon l'invention permet d'obtenir une sensibilité très élevée de détection, et permet par l'étape de mesure de référence 36 à intervalles réguliers de s'affranchir des variations de taux d'humidité dans l'air, des variations de température ambiante et des variations de buée à la surface intérieure du pare-brise par exemple, autant de paramètres qui influencent à la fois la capacité de mesure et la capacité de référence, et qui varient nettement plus lentement que les variations dues à la pluie. La méthode selon l'invention est ainsi spécialement adaptée à détecter des taux de pluie, de manière à contrôler le ou les essuie-glaces de la manière la plus appropriée.

Il sera clair pour l'homme du métier que la méthode peut comprendre plus ou moins de chargements intermédiaires, c'est-à-dire un nombre n quelconque, où n est un entier naturel plus grand ou égal à 1.

Un mode de réalisation particulier de la méthode de mesure selon l'invention telle que décrite ci-dessus et illustrée à la Fig. 9 comporte un comptage de trains d'impulsions toutes les 100 millisecondes et d'une durée de 5 millisecondes, un calcul de moyenne tous les cinq comptages, et une réinitialisation de la valeur de référence toutes les 30 secondes (il y a donc « passage » par la flèche en pointillées de l'étape 32 de retour à l'étape 28, puisque la valeur de référence n'est pas réinitialisée après chaque étape de calcul 32).

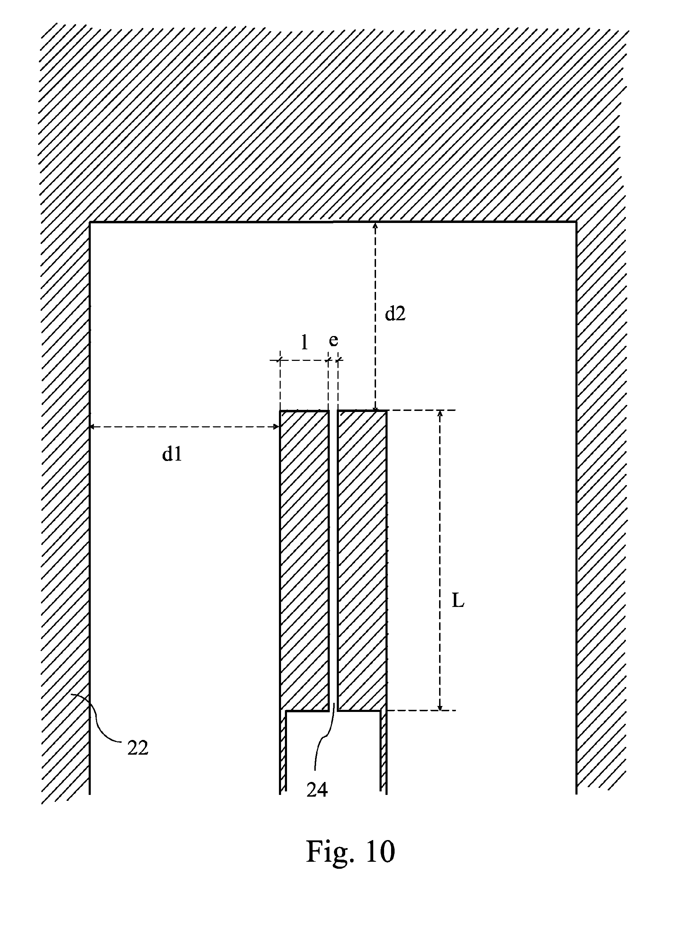

La Fig. 10 montre quant à elle une représentation vue de face d'une réalisation particulière d'une paire indépendante d'électrodes 20 du vitrage 2 selon l'invention, où les dimensions relatives des différents éléments correspondent substantiellement à la réalité. La Fig. 10 peut aussi être vue comme le masque permettant la réalisation des électrodes 20 de la paire.

En particulier, sont dessinées sur la Fig. 10 deux électrodes 20 adjacentes d'une longueur L = 80 mm, d'une largeur 1 = 15 mm, et séparées l'une de l'autre par une bande de largeur substantiellement constante 24, e = 2 mm. En outre, les électrodes 20 sont séparées de la partie conductrice résiduelle 22 par une zone de 50 mm de largeur (d1 = 50 mm et d2 = 50 mm) .

Les électrodes 20 représentées à la Fig. 10 sont réalisées dans une couche conductrice 10 de 160 nm d'épaisseur (et incluant de l'argent comme élément conducteur), séparée de la surface extérieure 12 du vitrage 2 par une feuille extérieure 4 en verre clair d'une épaisseur de 2.1 mm, et séparée en outre de l'autre surface du vitrage 2 par une feuille plastique 8 en PVB de 1.52 mm d'épaisseur et par une autre feuille 6 en verre claire d'une épaisseur de 2.1 mm. En outre, le dessin dans la couche conductrice 10 (ou « coating ») est réalisé par masquage lors du dépôt. Un circuit souple de connexion (non représenté) est utilisé et celui-ci est constitué d'un support en polyester de 50 µm d'épaisseur et d'une piste de cuivre de 35 µm. Un circuit de mesure de type QT300 avec sortie digitale de Quantum Research Group est utilisé pour réaliser les mesures successives, en combinaison avec une capacité de référence de 0.47 µF.

Avec une telle configuration, la capacité à sec obtenue expérimentalement est d'environ 9760 femtofarads. En ajoutant 8 gouttes d'eau (d'environ 1 microlitre chacune) sur la surface extérieure 12 du vitrage 2 au niveau de l'interstice entre les électrodes 20, un écart de 139 fF par rapport à la capacité obtenue à sec peut par exemple être obtenu expérimentalement.

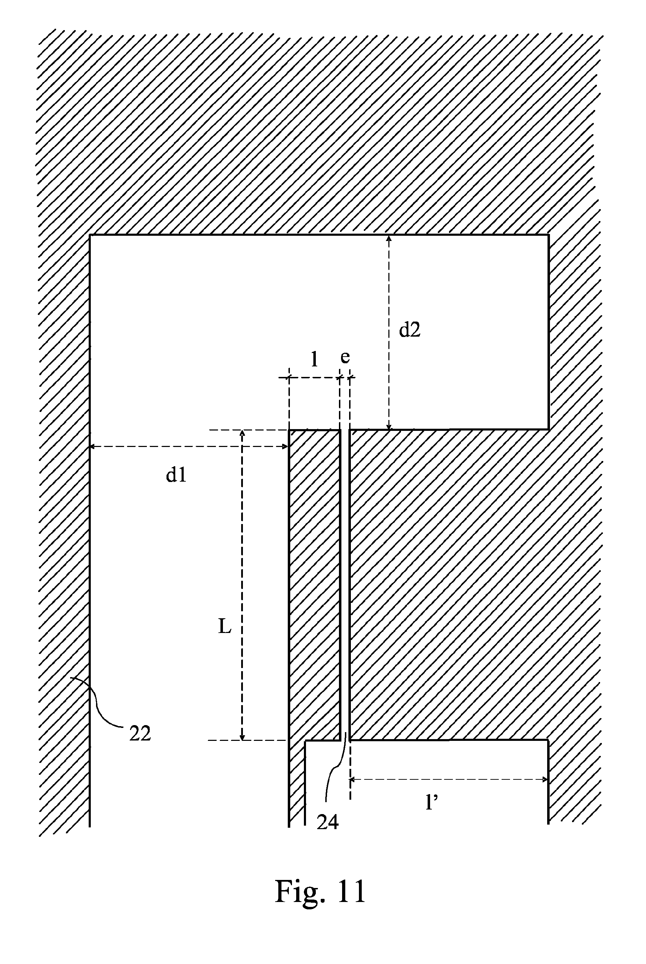

La Fig. 11 montre une représentation vue de face d'une autre réalisation particulière d'une paire indépendante d'électrodes 20 du vitrage 2 selon l'invention, où les dimensions relatives des différents éléments sont respectées.

En particulier, sont dessinées sur la Fig. 11 deux électrodes 20 adjacentes, dont l'une est formée par l'entièreté de la couche conductrice 10. La première électrode 20 a une largeur 1 = 15 mm et une longueur L = 80 mm. La partie de la seconde électrode 20 se trouvant en vis-à-vis de la première électrode 20 est constituée d'un rectangle de largeur 1' = 50 mm et de longueur L = 80 mm. L'interstice 24 entre les électrodes 20 a une largeur e = 2 mm. En outre, la zone non conductrice périphérique a une largeur de 50 mm (d1 = 50 mm et d2 = 50 mm).

Avec une telle configuration et une structure de système similaire à celle de la réalisation particulière montrée à la Fig. 10, la capacité à sec obtenue expérimentalement est d'environ 9230 fF. En ajoutant 8 gouttes d'eau (d'environ 1 microlitre chacune) sur la surface extérieure 12 du vitrage 2 au niveau de l'interstice entre les électrodes 20, un écart de 130 fF par rapport à la capacité obtenue à sec peut par exemple être obtenu expérimentalement.

Le vitrage 2 selon l'invention peut par exemple constituer ou être destiné à constituer un pare-brise ou une lunette arrière d'un véhicule, une fenêtre, un écran ou encore une porte.

Le liquide 14 dont le vitrage feuilleté 2 est destiné à mesurer la quantité peut par exemple être de la pluie, et le solide par exemple de la neige, ou des grêlons.

Le vitrage feuilleté 2 selon l'invention inclut deux feuilles transparentes 4 et 6. Elles peuvent être par exemple en verre de type sodo-calcique ou en polycarbonate, ou dans tout autre matériau présentant des propriétés structurelles et de transparence appropriées.

Le vitrage feuilleté 2 selon l'invention inclut également une feuille ou couche plastique 8. Le terme « plastique » ne doit pas être compris de façon restrictive en relation avec les propriétés physiques plastiques du matériau. De façon générale, la feuille plastique 8 fait référence à la couche intermédiaire, qui peut être en plastique, destinée principalement à coller les feuilles transparentes entre elles, et à maintenir dans la mesure du possible le vitrage 2 en une seule pièce en cas de choc. Cette feuille 8 peut par exemple être en polyvinyl butyral (PVB), d'une épaisseur de 380 µm, ou de 760 µm, ou être constituée de tout autre matériau présentant des propriétés de collage et de transparence appropriées.

Il est en outre à noter, que, dans le vitrage 2 selon l'invention, il peut y avoir autant de feuilles ou couches que souhaité, pour autant que les électrodes 20 soient disposées à l'intérieur du vitrage 2.

Le vitrage 2 selon l'invention peut comporter ou non une couche conductrice 10. Celle-ci peut être par exemple une couche destinée en outre à stopper les rayons infrarouges ou ultra-violets. Dans ce cas, l'avantage économique est clair et indéniable en ce sens que la couche nécessaire à la formation des électrodes 20 existe déjà à d'autres fins dans la composition du vitrage feuilleté 2.

Quand les électrodes 20 sont formées dans la couche conductrice 10, il sera clair pour l'homme du métier que les expressions « dans la couche conductrice 10 » et « dans le prolongement de la couche conductrice 10 » sont équivalentes du point de vue de l'invention.

Une paire d'électrodes 20 est apte à être contrôlée indépendamment si la capacité formée par ses électrodes 20 peut être chargée indépendamment des autres paires (s'il y a d'autres paires d'électrodes du moins).

Une partie au moins de chaque paire indépendante d'électrodes 20 du vitrage feuilleté 2 selon l'invention peut être avantageusement dans la zone du ou des essuie-glaces. Cette disposition présente l'avantage de permettre l'acquisition d'une mesure correspondant à la présence de liquide 14 ou de solide dans la zone de visibilité du pare-brise par exemple, tout en prenant en compte l'effet réel du ou des essuie-glaces sur la variation de la quantité de liquide 14 ou de solide sur la surface extérieure 12. Ceci permet ainsi un meilleur contrôle des essuie-glaces.

Il sera clair pour l'homme du métier que rendre la couche conductrice 10 incomplète pour réaliser les dessins des électrodes 20 peut par exemple être réalisé par suppression de la couche conductrice 10 à certains endroits, par découpage mécanique ou laser, ou par masquage ou dépôt sélectif au moment du dépôt de la couche conductrice 10, par sérigraphie (dépôt d'encre, de peinture, ou de pâte d'argent), ou tout autre moyen ou procédé.

De la même manière, la réalisation des électrodes 20 lorsqu'il n'y a pas de couche conductrice 10 peut être réalisée par des moyens analogues de déposition, sérigraphie ou autre. Les électrodes 20 peuvent également être opaques dans la mesure où elles ne sont pas disposées dans le champ de vision du conducteur, lorsqu'il s'agit d'un vitrage 2 destiné à constituer un pare-brise.

Il sera en outre clair pour l'homme du métier que la couche conductrice 10 elle-même peut par exemple être déposée (par bombardement ou « sputtering ») sur la face interne de la feuille extérieure 4 ou de la feuille intérieure 6, ou encore sur la couche de matière plastique 8. La couche conductrice peut également être déposée sur une feuille de PET (polyéthylène téréphthalate). Ce type de couche conductrice existe par exemple dans les vitrages 2 chauffants (pour le dégivrage), par exemple composés d'une feuille de verre extérieure 4, d'une couche de PVB de 380 µm (destinée au collage), d'une couche de PET de 150 µm (destinée à être chauffée), d'une seconde couche de PVB de 380 µm (également destinée au collage) et enfin de la feuille de verre intérieure 6. La couche de PET peut également ne couvrir que partiellement le vitrage 2.

Il sera en outre clair pour l'homme du métier que les électrodes peuvent par exemple être métalliques, en polymère conducteur, oxyde métallique, ou tout autre matériau pour autant que celui-ci soit suffisamment conducteur pour l'application en question.

La présente invention n'est pas limitée par ce qui est en particulier illustré dans les dessins et par ce qui est en particulier décrit ci-dessus. Les références dans les revendications ne limitent l'étendue de la protection. L'utilisation du verbe « comprendre » et ses conjugaisons n'excluent pas la présence d'éléments autres que ceux exposés dans les revendications. L'utilisation des articles "un", "une" ou "des" précédant un élément n'exclut pas la présence d'une pluralité de tels éléments.

## Revendications

1. Vitrage feuilleté (2) adapté pour une mesure d'une quantité d'un liquide (14) ou d'un solide sur une surface extérieure (12) du vitrage, incluant
une première feuille transparente, dite feuille extérieure (4), dont une des deux surfaces est destinée à constituer la surface extérieure (12) du vitrage (2);
une deuxième feuille transparente, dite feuille intérieure (6); et
une feuille intermédiaire, dite feuille plastique (8), située entre la feuille extérieure (4) et la feuille intérieure (6);
**caractérisé en ce que**
le vitrage (2) inclut en outre, entre la feuille extérieure (4) et la feuille intérieure (6) et sur une surface parallèle à celles-ci, au moins une paire d'électrodes (20), dite paire indépendante,
destinée à la mesure,
apte à être contrôlée indépendamment,
dont les électrodes (20) comportent une ou plusieurs branches,
sont séparées l'une de l'autre par une zone électriquement non conductrice, et
sont non entrelacées, c'est-à-dire que chaque branche d'au moins une des électrodes (20) n'est adjacente que d'un seul côté à une branche de l'autre électrode (20).

2. Vitrage (2) selon la revendication 1, incluant en outre une couche de matière électriquement conductrice, dite couche conductrice (10),
située soit entre la feuille extérieure (4) et la feuille plastique (8), soit entre la feuille plastique (8) et la feuille intérieure (6), et
incomplète de manière à former dans celle-ci l'au moins une paire d'électrodes (20).

3. Vitrage (2) selon la revendication 2, dans lequel la couche conductrice (10) inclut au moins une partie conductrice résiduelle (22) non destinée à la mesure, et formée dans la couche conductrice (10).

4. Vitrage (2) selon l'une quelconque des revendications précédentes, incluant au moins deux paires indépendantes dont deux au moins ont en commun une même électrode (20) .

5. Vitrage (2) selon l'une quelconque des revendications 1 à 3, incluant une seule paire indépendante.

6. Vitrage (2) selon l'une quelconque des revendications précédentes, dans lequel la zone électriquement non conductrice séparant les électrodes (20) de chaque paire indépendante forme une bande (24) de largeur substantiellement constante.

7. Vitrage (2) selon l'une quelconque des revendications précédentes, dans lequel la couche conductrice (10) présente une résistivité de surface inférieure à 10 ohms par carré, de préférence inférieur à 3.99 ohms par carré, de manière encore préférée inférieur à 3.5 ohms par carré.

8. Vitrage (2) selon l'une quelconque des revendications précédentes, dans lequel au moins une paire indépendante présente une capacité à sec inférieure à 80 picofarads, de préférence inférieur à 25 picofarads.

9. Vitrage (2) selon l'une quelconque des revendications précédentes, incluant en outre des moyens de connexion souples situés au moins en partie au sein du vitrage (2), et électriquement connectés aux paires indépendantes.

10. Système adapté pour une mesure d'une quantité d'un liquide (14) ou d'un solide sur la surface extérieure (12) d'une vitre, incluant
un vitrage (2) selon l'une quelconque des revendications précédentes, formant au moins partiellement la vitre; et
des moyens de mesure de variation de la capacité formée par au moins une paire indépendante du vitrage (2), dite capacité de mesure.

11. Système selon la revendication 10, dans lequel les moyens de mesure sont situés au moins partiellement au sein du vitrage (2), et électriquement connectés aux paires indépendantes.

12. Système selon l'une quelconque des revendications 10 ou 11, dans lequel les moyens de mesure de variation de la capacité de mesure comprennent
des premiers moyens de chargement d'une capacité de référence par transfert de charge;
des deuxièmes moyens de chargement simultané de la capacité de référence et de la capacité de mesure par transfert de charge; et
des moyens de comptage du nombre de transferts d'une quantité déterminée de charge nécessaires pour charger la ou les capacités;
des moyens de calcul de la mesure de la quantité du liquide (14) ou du solide en fonction des nombres obtenus par les moyens de comptage.

13. Méthode de mesure d'une quantité d'un liquide (14) ou d'un solide sur une surface extérieure (12) d'un vitrage, **caractérisée en ce qu'**elle inclut une étape de mesure de variation dans le temps de la capacité, dite capacité de mesure, formée par au moins une paire indépendante du vitrage (2) selon l'une quelconque des revendications 1 à 12.

14. Méthode de mesure selon la revendication 13, dans laquelle l'étape de mesure de variation dans le temps de la capacité de mesure inclut
une étape (26) de chargement d'une capacité de référence par transfert de charge, et de comptage du nombre de transferts d'une quantité déterminée de charge nécessaires pour charger la capacité de référence;
au moins une étape (28) de chargement simultané de la capacité de référence et de la capacité de mesure par transfert de charge, et de comptage du nombre de transferts d'une quantité déterminée de charge nécessaires pour charger lesdites capacités de référence et de mesure; et
une étape (32) de calcul de la mesure de la quantité du liquide (14) ou du solide en fonction des nombres obtenus.

15. Méthode de mesure selon la revendication 14, dans laquelle l'étape de mesure de variation dans le temps de la capacité de mesure inclut en outre, après l'étape (26) de chargement d'une capacité de référence et de comptage correspondant, l'au moins une étape (28) de chargement simultané de la capacité de référence et de la capacité de mesure et de comptage correspondant, et l'étape (32) de calcul de la mesure,
la répétition d'un cycle incluant
une étape (36) de chargement simultané de la capacité de référence et de la capacité de mesure par transfert de charge, et de comptage du nombre de transferts d'une quantité déterminée de charge nécessaires pour charger lesdites capacités de référence et de mesure;
au moins une autre étape (28) de chargement simultané de la capacité de référence et de la capacité de mesure et de comptage correspondant
une autre étape (32) de calcul de la mesure de la quantité du liquide (14) ou du solide en fonction des nombres obtenus lors du cycle.
